# EUROPÄISCHE PATENTSCHRIFT

(11) **EP 2 106 008 B1**
(45) Veröffentlichungstag und Bekanntmachung des Hinweises auf die Patenterteilung: **20.03.2019**
(21) Anmeldenummer: 09100072.9
(22) Anmeldetag: 26.01.2009
(51) Int. Cl.: H02J 1/00, G01D 21/00, G08C 19/02, G01D 3/08

(54) **Sensorsteuergerät für ein Fahrzeug und Verfahren zum Betrieb eines solchen Sensorsteuergeräts**
Sensor control device for a vehicle and method for operating such a sensor control device
Appareil de commande de capteur pour un véhicule et procédé de fonctionnement d'un tel appareil de commande de capteur

(30) Priorität: 27.03.2008 DE 102008000844
(43) Veröffentlichungstag der Anmeldung: 30.09.2009
(73) Patentinhaber: ROBERT BOSCH GMBH, 70442 Stuttgart (DE)
(72) Erfinder: Frese, Volker, 71701, Schwieberdingen (DE)

(56) Entgegenhaltungen:
- WO-A1-2007/132389
- US-A1- 2007 040 659
- "PSI5 Peripheral Sensor Interface for Automotive Applications V1.2", TECHNICAL SPECIFICATION, , Nr. V1.2 14. Juni 2007 (2007-06-14), Seiten 1-36, XP002494553, Gefunden im Internet: URL:http://www.psi5.org/en/pool/pdf/psi5_s pecification_v12_070614.pdf [gefunden am 2007-06-14]
- JUERGEN VALLDORF AND WOLFGANG GESSNER: "A New Micromechanical Pressure Sensor for Automotive Airbag Applications", ADVANCED MICROSYSTEMS FOR AUTOMOTIVE APPLICATIONS 2008 : [AMAA 2008 - INTERNATIONAL FORUM ON ADVANCED MICROSYSTEMS FOR AUTOMOTIVE APPLICATIONS ; CONFERENCE BOOK] / JÜRGEN VALLDORF; WOLFGANG GESSNER (ED.) [IRC, INNOVATION NORTHERN GERMANY; VDI/VDE, SP, 12. März 2008 (2008-03-12), Seiten 259-284, XP009129334, DOI: 10.1007/978-3-540-77980-3_20 ISBN: 978-3-540-77979-7

## Beschreibung

### Stand der Technik

Die Erfindung betrifft ein Sensorsteuergerät für ein Fahrzeug bzw. ein Verfahren zum Betrieb eines solchen Sensorsteuergeräts für ein Fahrzeug nach der Gattung der unabhängigen Patentansprüche.

Aus der technischen Spezifikation der PSI5 Schnittstelle und zwar der Version V1.2 vom 14.06.2007, die auf der Internetseite www.psi5.org veröffentlicht ist, geht eine Stromschnittstelle hervor, die zur Verbindung von Sensoren bzw. Sensorclustern mit einem Steuergerät vorzugsweise einem Airbagsteuergerät hervor. Bei dieser Stromschnittstelle wird auf einen Ruhestrom durch den Sensor aufmoduliert. Diese Modulation geschieht in einer sogenannten Manchestercodierung. Über diesen Ruhestrom kann der Sensor bzw. das Sensorcluster mit Energie versorgt werden, sodass der Sensor bzw. das Sensorcluster keine eigene Energieversorgung bzw. Verbindung zum Bordnetz benötigt. Damit kann der Sensor bzw. der Sensorcluster auch von der Autarkie des Airbagsteuergeräts bei einem Abriss der Batteriespannung profitieren. Diese Autarkie wird durch eine Energiereserve wie ein Elektrolytkondensator gewährleistet.

Aus der US 2007/0040659 A1 ist eine Vorrichtung mit einem ersten und einem zweiten Knoten, die zum Koppeln an eine Last konfiguriert sind, bekannt Eine Stromquelle ist angepasst, um einen ersten Strom durch wenigstens einen der ersten und zweiten Knoten zu der Last zu treiben. Ein erster Schalter ist mit dem mindestens einen der ersten und zweiten Knoten verbunden. Der erste Schalter ist angepasst, um den ersten Strom zu unterbrechen. Eine Erfassungsschaltung ist konfiguriert, um zu überwachen, ob ein zweiter Strom durch die Last bereitgestellt wird, nachdem der erste Strom unterbrochen wurde. Die Leseschaltung liefert eine Ausgabe, die einem Wert des zweiten Stroms entspricht und einen Typ der Last anzeigt.

Aus der WO 2007/132389 A1 ist eine Stromschnittstelle mit einem Sperrkondensator bekannt. Der Sperrkondensator ist an einem zusätzlichen Pin angebracht, wodurch eine Versorgungsspannungswelligkeitsunterdrückung einer internen Sensorschaltung ermöglicht wird. Die Versorgungsleitungen sind durch eine Diode oder einen Spannungsregler vom Kondensator entkoppelt. Dadurch beschränkt die Verwendung eines Sensorelements mit der Stromschnittstelle nicht die Größe des Sperrkondensators, da Übergangszeiten von Flanken von Ausgangsstromsignalen der Stromschnittstelle nicht durch ein Tiefpassverhalten des Blockkondensators in Kombination mit einem Messwiderstand beeinflusst werden, der typischerweise zur Messung der Stromstärke der Ausgangsstromsignale verwendet wird.

### Offenbarung der Erfindung

Das erfindungsgemäße Steuergerät für ein Fahrzeug bzw. das erfindungsgemäße Verfahren zum Betrieb eines solchen Steuergeräts für ein Fahrzeug mit den Merkmalen der unabhängigen Patentansprüche haben demgegenüber den Vorteil, dass nunmehr ein Sensorsteuergerät an die Stromschnittstelle angeschlossen wird und dass das Sensorsteuergerät bei einem Ausfall der eigenen Energieversorgung die Energie über die Stromschnittstelle für die Sensorik bezieht. Dafür wird erfindungsgemäß wenigstens eine Stromsenke derart an die Stromschnittstelle angeschlossen, dass diese wenigstens eine Stromsenke den Energieverbrauch der Sensorik simuliert, für den Fall, dass die Sensorik aus der eigenen Energieversorgung des Sensorsteuergeräts versorgt wird. Im Fall, dass die Energieversorgung des Sensorsteuergeräts ausfällt, wird diese Stromsenke angesteuert, sodass dann die Energie für die Sensorik aus der Stromschnittstelle entnommen wird, sodass weiterhin die Sensorik Sensorwerte liefern kann. Im Fall, dass die Energieversorgung des Sensorsteuergeräts ausfällt, wird die Stromsenke zur Emulation des Stromverbrauchs der Sensorik abgeschaltet, da nun die Energieversorgung für die Sensorik den Stromverbrauch auf der Schnittstelle erzeugt. Die Simulation des Energieverbrauchs der Sensorik ermöglicht, dass beim Umschalten auf die Energieversorgung durch die Stromschnittstelle auf der Übertragungsleitung zu einem Airbagsteuergerät beispielsweise keine Modulation durch das Umschalten auftritt. Dies liegt daran, dass die Simulation des Energieverbrauchs der Sensorik durch die Stromschnittstelle genauso groß ist, wie der tatsächliche Verbrauch, wenn die Energie aus der Stromschnittstelle entnommen wird. Dies bedeutet zwar eine zusätzliche Belastung der Stromschnittstelle, ermöglicht aber einen sicheren Betrieb des Sensorsteuergeräts.

Ein Spannungsregler, der die Energieversorgung für das Sensorsteuergerät dadurch realisiert, dass er die notwendigen Spannungen für die Sensorik aus der Energieversorgung ableitet, führt die Ansteuerung der Stromsenke durch, sodass über diesen Spannungsregler auch die Energieversorgung aus der Stromschnittstelle ermöglicht wird.

Ein Sensorsteuergerät ist vorliegend eine üblicherweise baulich abgeschlossene Einheit, beispielsweise durch ein Metall und/oder Kunststoffgehäuse, die zumindest eine Sensorik, üblicherweise mehrere Sensoriken, beherbergt und notwendige Mittel zur Datenübertragung dieser Sensorwerte aufweist. Auch alle möglichen Mittel zum Betrieb dieses Sensorsteuergeräts, wie eine Energieversorgung, müssen vorgesehen sein. Es ist möglich, dass zusätzlich eine Auswerteschaltung wie ein Mikrocontroller in Sensorsteuergeräten vorhanden ist, um beispielsweise eine Plausibilisierung oder Vorverarbeitung der Sensorwerte zu erreichen. Auch kann diese Auswerteschaltung für die Datenübertragung beispielsweise eine Fehlerkorrektur oder andere Formatierungen vornehmen, um die Datenübertragung zu gewährleisten. Dieses Sensorsteuergerät kann an ein oder mehrere Steuergeräte angeschlossen sein, beispielsweise das Airbagsteurgerät, ein Steuergerät für eine Fahrdynamikregelung und/oder Bremse oder auch ein sogenanntes Sicherheitssteuergerät, was alle Sicherheitsfunktionen für ein Fahrzeug oder zumindest einen großen Teil davon beherbergt. Auch andere Komfortsteuergeräte können an dieses Sensorsteuergerät angeschlossen sein. Beispielhaft wird jedoch vorliegend eine Punkt-zu-Punkt-Verbindung beschrieben. Auch eine Quasi-Busverbindung ist vorliegend möglich.

Als Stromschnittstelle wird vorliegend eine solche Schnittstelle bezeichnet, die einen Ruhestrom aufweist, der eine Energieversorgung des Sensorsteuergeräts ermöglicht. Die zu übertragenden Daten werden dann auf diesen Ruhestrom aufmoduliert bzw. durch eine Stromsenke wird der Ruhestrom derart verändert, dass die entsprechenden Daten übertragen werden können. Beispiele für solche Stromschnittstellen sind die von der Anmelderin bekannte PSI5-, PAS 4-, PAS 3- und so weiter -Schnittstellen. Es gibt jedoch auch noch weitere Stromschnittstellen.

Die Daten, die übertragen werden, sind üblicherweise die Sensordaten und zusätzliche Daten wie eine Fehlerkorrektur bzw., um Datentelegramme in ein entsprechendes Format zu bringen. Es ist eine asynchrone oder synchrone Datenübertragung möglich. Eine synchrone Datenübertragung bedingt ein Synchronisierungssignal vom Steuergerät, an das die Sensorwerte übertragen werden. In diesem Fall kann demnach eine bidirektionale oder zumindest teilweise bidirektionale Datenübertragung vorgesehen sein. Bei einer asynchronen Datenübertragung kann auch eine unidirektionale Datenübertragung vorgesehen sein, wo nur Daten vom Sensorsteuergerät, beispielsweise zum Airbagsteuergerät, übertragen werden.

Bei einem Spannungsregler handelt es sich beispielsweise um einen üblichen Schaltregler, der aus der Energieversorgung die für das Steuergerät benötigten Betriebsspannungen wie 3,3V, 5V oder andere Spannungswerte bereitstellt. Dieser Spannungsregler hat erfindungsgemäß die Ansteuerung für die wenigstens eine Stromsenke, um bei einem Ausfall der Energieversorgung des Sensorsteuergeräts auf eine Energieversorgung durch die Stromschnittstelle umzuschalten.

Die Sensorik ist beispielsweise eine kinematische Sensorik wie eine Beschleunigungs-, Körperschall- und/oder Drehbewegungssensorik, die unmittelbar solche kinematischen Werte erfasst.

Bei der Energieversorgung des Sensorsteuergeräts handelt es sich beispielsweise um die Batteriespannung des Bordnetzes. Die Energieversorgung des Sensorsteuergeräts ist jedoch erfindungsgemäß im Notfall auch die Energieversorgung aus der Stromschnittstelle.

Bei einer Stromsenke handelt es sich, wie aus den abhängigen Ansprüchen hervorgeht, beispielsweise um einen einfachen Stromspiegel, es sind jedoch auch andere kompliziertere Stromspiegelschaltungen möglich. Auch alle anderen, dem Fachmann bekannten Realisierungsmöglichkeiten für eine Stromsenke sind vorliegend denkbar. Der Anschluss an die Stromschnittstelle ist beispielsweise unmittelbar, sodass die wenigstens eine Stromsenke zwischen den beiden Leitungen der Stromschnittstelle angeschlossen ist. Es ist möglich, mehrere Stromschnittstellen parallel und/oder in Reihe vorzusehen. Damit ist eine abgestuftere Schaltung für die Simulation des Energieverbrauchs möglich. Es ist weiterhin möglich, eine einzige Stromschnittstelle oder mehrere Stromschnittstellen in ihrer Simulation des Energieverbrauchs zu modulieren.

Die Energieversorgung aus der Stromschnittstelle kann auch nur teilweise erfolgen, beispielsweise, wenn die Belastbarkeit der Energieversorgung des Sensorsteuergeräts überschritten wird und diese nur noch zum Teil genutzt werden kann.

Durch die in den abhängigen Ansprüchen aufgeführten Maßnahmen und Weiterbildungen sind vorteilhafte Verbesserungen des in den unabhängigen Patentansprüchen angegebenen Sensorsteuergerätes für ein Fahrzeug bzw. des in den unabhängigen Patentansprüchen angegebenen Verfahrens zum Betrieb eines solchen Steuergeräts für ein Fahrzeug möglich.

Vorteilhafterweise ist die wenigstens eine Stromsenke durch einen einfachen Stromspiegel realisiert. Dabei kann die Verstärkung durch die Eigenschaften der verwendeten Transistoren beeinflusst werden.

Bei einer synchronen Datenübertragung weist das Sensorsteuergerät vorteilhafterweise die Erkennung eines Synchronisationsimpulses auf, beispielsweise durch einen Mikrocontroller, wobei bei dieser Erkennung auch ein Spannungsregler vorgesehen sein kann. Die Ansteuerung der wenigstens einen Stromsenke erfolgt dann während dieses Synchronisationsimpulses. Dies hat den Vorteil, dass keine fehlerhaften Signale, beispielsweise im Airbagsteuergerät, erzeugt werden, denn während des Synchronisationsimpulses fließen Umladeströme, und daher wird die Stromdetektion im Airbagsteuergerät abgeschaltet. Daher können Stromschwankungen durch eine solche Umschaltung nicht zu fehlerhaften Signalen führen.

Darüber hinaus ist es vorteilhaft, dass die Ansteuerung der wenigstens einen Stromsenke in Abhängigkeit von der Datenübertragung erfolgt. Allgemein kann die Ansteuerung der Stromsenke in Abhängigkeit von dieser Datenübertragung erfolgen, wie es beispielhaft durch den Synchronisationsimpuls exemplifiziert wurde. Es ist möglich, weitere Eigenschaften der Datenübertragung zur Ansteuerung der Stromsenke auszunutzen, um die Detektion fehlerhafter Signale zu vermeiden. Beispielsweise kann die Ansteuerung in Pausen der Datenübertragung erfolgen. Dies ist besonders vorteilhaft für die sogenannte asynchrone Datenübertragung, bei der beispielsweise nur Daten vom Sensorsteuergerät zum Airbagsteuergerät übertragen werden. Daher wird die erfindungsgemäße Ansteuerung der wenigstens einen Stromquelle außerhalb einer Botschaft ausgeführt werden, d. h., wenn keine Datentelegramme vom Sensorsteuergerät zum Airbagsteuergerät übertragen werden. Die eventuell auftretenden Stromschwankungen werden, falls die Detektionsschwelle überschritten wird, auf jeden Fall zu fehlerhaften Manchesterprotokollen führen und somit vom Steuergerät erkannt. Dies muss dann durch entsprechende Routinen im Airbagsteuergerät abgefangen werden.

Ausführungsbeispiele der Erfindung werden in der Zeichnung dargestellt und in der nachfolgenden Beschreibung näher erläutert.

Es zeigen Figur 1 ein Blockschaltbild des erfindungsgemäßen Steuergeräts, das über eine Stromschnittstelle mit einem weiteren Steuergerät verbunden ist, Figur 2 ein Flussdiagramm des erfindungsgemäßen Verfahrens und Figur 3 ein Ausführungsbeispiel für die Stromsenke.

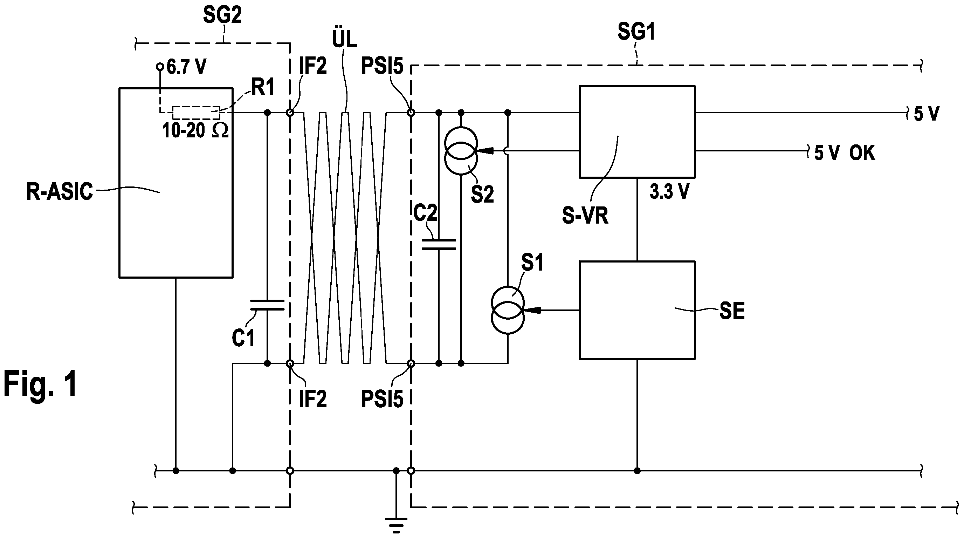

Figur 1 erläutert in einem Blockschaltbild das erfindungsgemäße Steuergerät SG1, das über eine Stromschnittstelle PSI5 und eine Übertragungsleitung ÜL an ein weiteres Steuergerät SG2 angeschlossen ist. Das erfindungsgemäße Steuergerät SG1, vorliegend ein Sensorsteuergerät, ist an die Stromschnittstelle PSI5 mit einem Kondensator C2 einer Stromsenke S1 und einer weiteren Stromsenke S2 sowie einem Umschalter und Spannungsregler S-VR verbunden. Die Stromsenken S1 und S2 sowie der Kondensator C2 sind unmittelbar zwischen den beiden Leitungen der Stromschnittstelle PSI5 angeschlossen und damit parallel zueinander geschaltet. Der Umschalter und Spannungsregler S-VR ist an dem oberen Anschlusspunkt und d.h. nur einer der Leitungen, der Übertragungsleitung ÜL, angeschlossen und mit einem weiteren Anschluss an eine Sensorik SE, wobei der Umschalter und Spannungsregler S-VR über diese Verbindung die Sensorik SE mit der notwendigen Spannung, vorliegend von 3,3 Volt, versorgt. Weiterhin ist der Umschalter und Spannungsregler mit der Spannungsversorgung des Steuergeräts SG1 verbunden, um die Sensorik SE aus dieser Energieversorgung mit Energie zu versorgen. Der Umschalter und Spannungsregler S-VR ist weiterhin an einen Steuereingang der Stromsenke S2 angeschlossen. Über diesen Steuereingang ist es dem Spannungsregler S-VR möglich, die Stromsenke S2 ein- bzw. auszuschalten. In einer Weiterbildung wäre es möglich, auch eine Modulation der Stromsenke S2 vorzunehmen.

Die Stromsenke S1 wird von der Sensorik SE moduliert. Damit kann über die Ansteuerung der Stromsenke S1 auf die Stromschnittstelle PSI5 und damit die Übertragungsleitungen ÜL die Sensorinformation aufmoduliert werden. Die Sensorik SE ist weiterhin über eine Masseleitung, an die auch das zweite Steuergerät SG2 angeschlossen ist, verbunden.

Der Kondensator C2 dient zum Kurzschließen von hochfrequenten Impulsen auf der Leitung ÜL.

Weitere Komponenten des Steuergeräts SG1 sind der Einfachheit halber weggelassen worden, da sie zum Verständnis der Erfindung nicht beitragen.

Das Steuergerät SG2 ist ebenfalls an die Übertragungsleitung ÜL über die Verbindungspunkte IF2 angeschlossen. Auch hier ist zwischen den beiden Leitungen der Übertragungsleitung ÜL ein Kondensator C1 zum Kurzschließen von hochfrequenten Impulsen vorgesehen. An den oberen Anschluss IF2 der Übertragungsleitung ÜL im Steuergerät SG2, üblicherweise ein Airbagsteuergerät, ist ein Empfängerbaustein R-ASIC angeschlossen und der untere Anschluss der Übertragungsleitung ÜL ist mit der Fahrzeugmasse verbunden wie auch der Empfängerbaustein R-ASIC mit einem weiteren Anschluss. Damit ist zumindest eine Masseschleife zwischen den beiden Steuergeräten und der Übertragungsleitung vermieden worden, sodass EMV (elektromagnetische Verträglichkeit) gewährleistet ist.

Der Empfängerbaustein R-ASIC empfängt über die Übertragungsleitung ÜL die Daten und damit die Sensorwerte. Der Empfängerbaustein R-ASIC versorgt über eine Spannungsversorgung von 6,7 Volt und einen Vorwiderstand R1 von 10 bis 20 Ohm die Übertragungsleitung mit dem Ruhestrom.

Der Umschalter und Spannungsregler S-VR erkennt, wann die Energieversorgung von 5 Volt des Steuergeräts SG1 ausfällt oder zumindest teilweise nicht mehr verfügbar ist. In einem solchen Fall schaltet er die Stromsenke S2 aus, die den Energieverbrauch der Sensorik SE für die Stromschnittstelle PSI5 simuliert hat. Denn nun schaltet der Spannungsregler S-VR die Energie der Stromschnittstelle PSI5 als Energieversorgung zu, um die Sensorik SE weiterhin mit der notwendigen Energie zu versorgen.

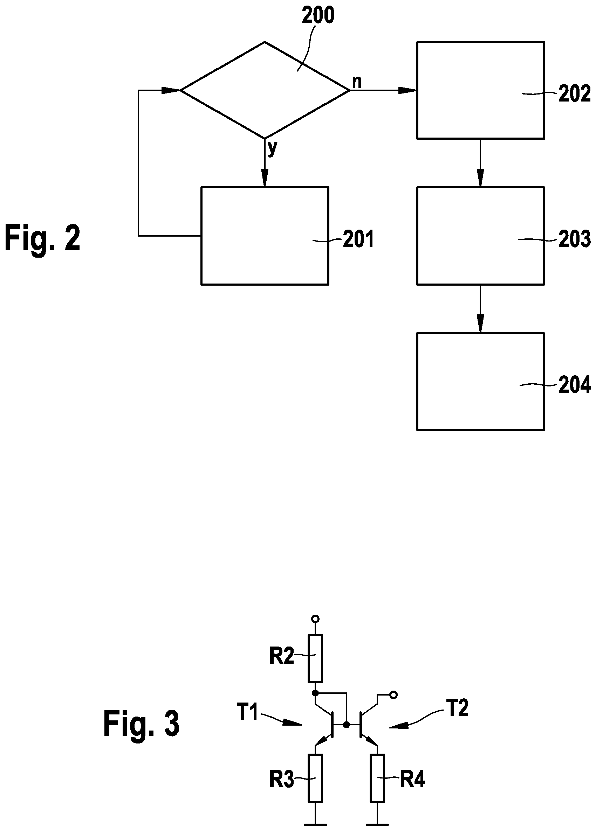

Figur 2 erläutert in einem Flussdiagramm das erfindungsgemäße Verfahren. In Verfahrensschritt 200 wird vom Spannungsregler S-VR geprüft, ob die Energieversorgung des Steuergeräts SG1, nämlich die 5 Volt, vorhanden sind oder nicht. Ist die Energieversorgung vorhanden, dann wird die Sensorik SE mit der notwendigen Energie, vorliegend von 3,3 Volt, versorgt. Dies geschieht in Verfahrensschritt 201. Dann wird zu Verfahrensschritt 200 zurückgesprungen.

Wurde jedoch in Verfahrensschritt 200 festgestellt, dass die Energieversorgung des Steuergeräts SG1 nicht oder nur noch teilweise verfügbar ist, dann wird in Verfahrensschritt 202 die Stromsenke S2 ausgeschaltet, die bislang eingeschaltet war, um den Energieverbrauch der Sensorik SE für die Stromschnittstelle PSI5 zu simulieren. Dann wird noch auf das Ende einer Botschaft oder auf einen Synchronimpuls gewartet.

Dieser Stromverbrauch, den die Stromsenke S2 verursacht hat, wird nun vom Spannungsregler S-VR aufgenommen, um die Sensorik SE nun aus der Stromschnittstelle PSI5 mit der notwendigen Energie zu versorgen, was in Verfahrensschritt 203 durchgeführt wird.

Optional kann noch eine Warnung in Verfahrensschritt 204 ausgegeben werden, dass die Energieversorgung dieses Steuergeräts nicht mehr korrekt ist. Dies kann beispielsweise durch die Ansteuerung einer Warnlampe oder einer Anzeige und/oder ein Beschreiben eines Fehlerspeichers erfolgen.

Figur 3 zeigt ein Ausführungsbeispiel für die erfindungsgemäße Stromsenke S2. Hierfür wird ein einfacher Stromspiegel verwendet, der über den Widerstand R2 angesteuert wird. Das Verhältnis der Verstärkungen, der Transistoren T1 und T2, bestimmt die Gesamtverstärkung dieses Stromspiegels. Dies kann jedoch auch über die Widerstände R3 und R4 festgelegt werden.

## Patentansprüche

1. Sensorsteuergerät (SG1) für ein Fahrzeug mit:
- einer Stromschnittstelle zur Datenübertragung
- einem Spannungsregler (S-VR), der eine Sensorik (SE) in Abhängigkeit von einer Energieversorgung des Sensorsteuergeräts (SG1) mit Energie versorgt,
- **gekennzeichnet durch** wenigstens eine Stromsenke (S2), die an die Stromschnittstelle angeschlossen ist und so angepasst ist, einen Energieverbrauch der Sensorik (SE) zu simulieren, wobei die wenigstens eine Stromsenke (S2) vom Spannungsregler (S-VR) in Abhängigkeit von der Energieversorgung angesteuert wird, sodass der Spannungsregler (S-VR) die Sensorik zumindest teilweise aus der Stromschnittstelle mit Energie versorgt.

2. Sensorsteuergerät nach Anspruch 1, **dadurch gekennzeichnet, dass** die wenigstens eine Stromsenke (S2) einen einfachen Stromspiegel aufweist.

3. Sensorsteuergerät nach Anspruch 1 oder 2, **dadurch gekennzeichnet, dass** die Ansteuerung der wenigstens einen Stromsenke (S2) in Abhängigkeit von der Datenübertragung erfolgt.

4. Sensorsteuergerät nach Anspruch 1, 2 oder 3, **dadurch gekennzeichnet, dass** eine Erkennung eines Synchronisationsimpulses vorgesehen ist, sodass die Ansteuerung der wenigstens einen Stromsenke (S2) während des Synchronisationsimpulses erfolgt.

5. Sensorsteuergerät nach Anspruch 3, **dadurch gekennzeichnet, dass** die Ansteuerung in Pausen der Datenübertragung erfolgt.

6. Verfahren zum Betrieb eines Sensorsteuergerätes (SG1) für ein Fahrzeug mit folgenden Verfahrensschritten:
- Versorgen einer Sensorik (SE) mit Energie in Abhängigkeit von einer Energieversorgung des Sensorsteuergeräts (SG1) durch einen Spannungsregler (S-VR)
- Simulieren eines Energieverbrauchs der Sensorik (SE) durch wenigstens eine Stromsenke (S2), die an eine Stromschnittstelle angeschlossen ist
- Ansteuern der wenigstens einen Stromsenke (S2) durch den Spannungsregler (S-VR) in Abhängigkeit von der Energieversorgung, sodass der Spannungsregler (S-VR) die Sensorik (SE) zumindest teilweise aus der Stromschnittstelle mit Energie versorgt.

7. Verfahren nach Anspruch 6, **dadurch gekennzeichnet, dass** die Ansteuerung in Abhängigkeit von der Datenübertragung erfolgt.

8. Verfahren nach Anspruch 6, **dadurch gekennzeichnet, dass** die Ansteuerung der wenigstens einen Stromsenke während eines Synchronisationsimpulses über die Stromschnittstelle erfolgt.

9. Verfahren nach Anspruch 7, **dadurch gekennzeichnet, dass** die Ansteuerung in Pausen der Datenübertragung erfolgt.

10. Verfahren nach einem der Ansprüche 6 bis 9, **dadurch gekennzeichnet, dass** über die Stromschnittstelle Daten der Sensorik (SE) übertragen werden.

## Claims

1. Sensor control device (SG1) for a vehicle, having:
- a current interface for transmitting data,
- a voltage regulator (S-VR) which supplies a sensor system (SE) with energy on the basis of an energy supply for the sensor control device (SG1),
- **characterized by** at least one current sink (S2) which is connected to the current interface and is adapted to simulate an energy consumption of the sensor system (SE), wherein the at least one current sink (S2) is controlled by the voltage regulator (S-VR) on the basis of the energy supply, with the result that the voltage regulator (S-VR) at least partially supplies the sensor system with energy from the current interface.

2. Sensor control device according to Claim 1, **characterized in that** the at least one current sink (S2) has a simple current mirror.

3. Sensor control device according to Claim 1 or 2, **characterized in that** the at least one current sink (S2) is controlled on the basis of the transmission of data.

4. Sensor control device according to Claim 1, 2 or 3, **characterized in that** detection of a synchronization pulse is provided, with the result that the at least one current sink (S2) is controlled during the synchronization pulse.

5. Sensor control device according to Claim 3, **characterized in that** the control is carried out in data transmission pauses.

6. Method for operating a sensor control device (SG1) for a vehicle, having the following method steps of:
- supplying a sensor system (SE) with energy on the basis of an energy supply for the sensor control device (SG1) by means of a voltage regulator (S-VR),
- simulating an energy consumption of the sensor system (SE) by means of at least one current sink (S2) which is connected to a current interface,
- controlling the at least one current sink (S2) by means of the voltage regulator (S-VR) on the basis of the energy supply, with the result that the voltage regulator (S-VR) at least partially supplies the sensor system (SE) with energy from the current interface.

7. Method according to Claim 6, **characterized in that** the control is carried out on the basis of the transmission of data.

8. Method according to Claim 6, **characterized in that** the at least one current sink is controlled during a synchronization pulse via the current interface.

9. Method according to Claim 7, **characterized in that** the control is carried out in data transmission pauses.

10. Method according to one of Claims 6 to 9, **characterized in that** data from the sensor system (SE) are transmitted via the current interface.

## Revendications

1. Appareil de commande de capteur (SG1) pour un véhicule, comportant :
- une interface de courant pour la transmission de données,
- un régulateur de tension (S-VR) qui alimente en l'énergie un système de capteurs (SE) en fonction d'une alimentation en énergie de l'appareil de commande de capteur (SG1),
- **caractérisé par** au moins un puits de courant (S2) connecté à l'interface de courant et conçu pour simuler une consommation d'énergie du système de capteurs (SE), dans lequel ledit au moins un puits de courant (S2) est commandé par le régulateur de tension (S-VR) en fonction de l'alimentation en énergie de manière à ce que le régulateur de tension (S-VR) alimente en énergie le système de capteurs au moins partiellement à partir de l'interface de courant.

2. Appareil de commande de capteur selon la revendication 1, **caractérisé en ce que** ledit au moins un puits de courant (S2) comporte un miroir de courant simple.

3. Appareil de commande de capteur selon la revendication 1 ou 2, **caractérisé en ce que** la commande dudit au moins un puits de courant (S2) est effectuée en fonction de la transmission de données.

4. Appareil de commande de capteur selon la revendication 1, 2 ou 3, **caractérisé en ce qu'**une reconnaissance d'une impulsion de synchronisation est prévue de manière à ce que la commande dudit au moins un puits de courant (S2) soit effectuée pendant l'impulsion de synchronisation.

5. Appareil de commande de capteur selon la revendication 3, **caractérisé en ce que** la commande est effectuée au cours de pauses de la transmission de données.

6. Procédé pour faire fonctionner une unité de commande de capteur (SG1) pour un véhicule, comprenant les étapes suivantes :
- alimenter en énergie un système de capteurs (SE) en fonction d'une alimentation en énergie de l'unité de commande du capteur (SG1) au moyen d'un régulateur de tension (S-VR),
- simuler une consommation d'énergie du système de capteurs (SE) par l'intermédiaire d'au moins un puits de courant (S2) connecté à une interface de courant,
- commander ledit au moins un puits de courant (S2) par l'intermédiaire du régulateur de tension (S-VR) en fonction de l'alimentation en énergie de manière à ce que le régulateur de tension (S-VR) alimente en énergie le système de capteurs (SE) au moins partiellement à partir de l'interface électrique.

7. Procédé selon la revendication 6, **caractérisé en ce que** la commande est effectuée en fonction de la transmission de données.

8. Procédé selon la revendication 6, **caractérisé en ce que** la commande dudit au moins un puits de courant est effectuée pendant une impulsion de synchronisation par l'intermédiaire de l'interface de courant.

9. Procédé selon la revendication 7, **caractérisé en ce que** la commande est effectuée au cours de pauses de la transmission de données.

10. Procédé selon l'une des revendications 6 à 9, **caractérisé en ce que** les données du système de capteurs (SE) sont transmises par l'intermédiaire de l'interface de courant.
